# EUROPEAN PATENT SPECIFICATION

(11) **EP 4 209 938 B1**
(45) Date of publication and mention of the grant of the patent: **26.02.2025**
(21) Application number: 22150373.3
(22) Date of filing: 05.01.2022
(51) Int. Cl.: G06F 21/14

(54) **SYSTEMS, METHODS, AND STORAGE MEDIA FOR CREATING SECURED COMPUTER CODE**
SYSTEME, VERFAHREN UND SPEICHERMEDIEN ZUR ERZEUGUNG VON GESICHERTEM COMPUTERCODE
SYSTÈMES, PROCÉDÉS ET SUPPORTS DE STOCKAGE POUR LA CRÉATION DE CODE INFORMATIQUE SÉCURISÉ

(43) Date of publication of application: 12.07.2023
(73) Proprietor: Irdeto B.V., 2132 LS Hoofddorp (NL)
(72) Inventor: HICKIE, Thomas, Ottawa, K1W0B5 (CA); DURAND, Robert, Gatineau, J8T 6C9 (CA)
(74) Representative: Boult Wade Tennant LLP

(56) References cited:
- US-A1- 2010 281 459
- US-A1- 2014 245 271
- US-A1- 2018 121 680

## Description

### FIELD OF THE DISCLOSURE

The present disclosure relates to systems, methods, and storage media for creating secured computer code that is resistant to attack.

### BACKGROUND

Virtually all aspects of business are controlled by software executing on computing platforms. Accordingly, it has become common for bad actors to attack code in order to steal intellectual property, access various systems in an unauthorized manner and generally bypass licensing and other controls. Further, much software code executes on devices that are readily accessible by a potential attacker, such as mobile phones and internet connected servers. As a result, the need to create secure software code that is difficult to attack has become very significant.

Various methods of securing software code are well known. For example, it is common to use "code obfuscation" techniques to render software code more secure against potential attacks. Code obfuscation is the process of modifying executable software code in a manner that makes the code appear more complex to an attacker but allows the code to remain fully functional. Code obfuscation can make reverse-engineering of the code difficult and economically unfeasible for the attacker. Code obfuscation includes various techniques that can be used in combination. Examples of well-known code obfuscation techniques include instruction pattern transformation, renaming methods/variables, control flow obfuscation, string encryption, dummy code insertion, binary linking/merging, ad opaque predicate insertion.

Generally, code obfuscation techniques result in increased overhead in the form of computing resources required to execute the code efficiently. Therefore, it is necessary to balance the need for security with the need for fast execution of the software and a resulting positive user experience. In order to achieve this balance, it is known to attempt to focus the application of obfuscation techniques on the most security sensitive portions of the code, i.e. code portions that are most likely to be attacked. For example, portions of code which check user authorization or include decryption keys may be considered as sensitive portions. Code obfuscation is often accomplished as a service by a service provider who receives the unsecured code and performs obfuscation processes thereon. However, it can be difficult, if not impossible, to identify the most sensitive portions of the code to which obfuscation should be applied without detailed knowledge of the code. As a result, obfuscation is often applied in a somewhat random manner. This often results in a less than optimum balance between security and performance. Prior art documents US 2014/245271 A1, US 2010/281459 A1 and US 2018/121680 A1, disclose systems and method for obfuscating portions of source code that selectively apply security transformations to a subset of functions or blocks of a computer code, without however, selecting the subset of functions to be obfuscated based on an anomaly measure.

One possible approach for identifying sensitive code is with machine learning. Given a training set of code samples and a measure of their security sensitivity, a model could be trained to evaluate the security sensitivity of other code. Such an effort was undertaken by the inventors, creating a set of training data via a manual survey by security experts of over 1000 C code samples. The derived model achieved accuracy of about 60% on other C code. However, its effectiveness for other source code languages, or other code representations, is likely much lower. This process was also very expensive and time-consuming. Repeating this survey for other languages would be similarly expensive, and repeating it for other types of code such as Android DEX bytecode, or Low Level Virtual Machine (LLVM) bitcode, would be almost impossible since very few people can read such code. As such, an ML-based approach will not work in general. A closely related problem of interest is the evaluation of code obfuscation techniques in terms of their effectiveness at preventing attacks. The connection is as follows: the better protected a piece of code is, the less likely it is to be attacked. By the definition above, this means the better the protection, the lower the security sensitivity. In a perfectly obfuscated program, there would be no security sensitive code. As such, a method for determining the security sensitivity of code (deciding which code should be protected) could also be used as a metric for the effectiveness of that protection.

### SUMMARY

Applicants have developed a process for determining sensitive portions of code without detailed knowledge of the code and the functions thereof. One aspect of the present disclosure relates to a system configured for creating secured computer code. The system may include one or more hardware processors configured by machine-readable instructions. The processor(s) may be configured to access computer code. The processor(s) may be configured to convert the computer code into a numeric description of characteristics of the code. The processor(s) may be configured to partition the computer code into blocks of code. The processor(s) may be configured to determine a corresponding ranking of at least some of the blocks of code with an anomaly measure by applying an anomaly detection algorithm to the blocks of code. The processor(s) may be configured to select anomalous blocks of the blocks of code by applying a threshold to the rankings. The processor(s) may be configured to apply code security techniques to at least one of the anomalous blocks of code to thereby create secured computer code.

Another aspect of the present disclosure relates to a method for creating secured computer code. The method may include accessing computer code. The method may include converting the computer code into a numeric description of characteristics of the code. The method may include partitioning the computer code into blocks of code. The method may include determining a corresponding ranking of at least some of the blocks of code with an anomaly measure by applying an anomaly detection algorithm to the blocks of code. The method may include selecting anomalous blocks of the blocks of code by applying a threshold to the rankings. The method may include applying code security techniques to at least one of the anomalous blocks of code to thereby create secured computer code.

Yet another aspect of the present disclosure relates to a non-transient computer-readable storage medium having instructions embodied thereon, the instructions being executable by one or more processors to perform a method for creating secured computer code. The method may include accessing computer code. The method may include converting the computer code into a numeric description of characteristics of the code. The method may include partitioning the computer code into blocks of code. The method may include determining a corresponding ranking of at least some of the blocks of code with an anomaly measure by applying an anomaly detection algorithm to the blocks of code. The method may include selecting anomalous blocks of the blocks of code by applying a threshold to the rankings. The method may include applying code security techniques to at least one of the anomalous blocks of code to thereby create secured computer code.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 is a block diagram of an example workflow in a protection system utilizing disclosed implementations.
FIG. 2 is a block diagram of a computing system configured for creating secured computer code, in accordance with one or more implementations.
FIG. 3 is a flowchart of a method for creating secured computer code, in accordance with one or more implementations.

### DETAILED DESCRIPTION

Although it is difficult in general to determine if code is security sensitive, it is much more feasible to recognize code that is "different", or anomalous, as compared to the other code in a project. The premise of this invention was based on the hypothesis that there may be a correlation between code that is anomalous, and code that is security sensitive.

The inventors conducted experiments utilizing a curated data set that was hand annotated by security engineers, as described above, and a method of unsupervised learning to create models that would measure how anomalous a given block of code is in relation to other blocks of code. Based on a number of experiments, the inventors concluded that there is a significant correlation between code portions which are anomalous with respect to other portions of the same code base and code portions that are security sensitive.

Thus, the implementations use a statistical method for finding security sensitive code by focusing on code that is anomalous within the program. The method serves a dual role both as a means of identifying code that is worth protecting, and a measure for how well that code is protected after software protection is employed. Compared to earlier approaches, the method has the considerable advantage that it can be applied to code regardless of its representation and does not require knowledge of the code flow and functions.

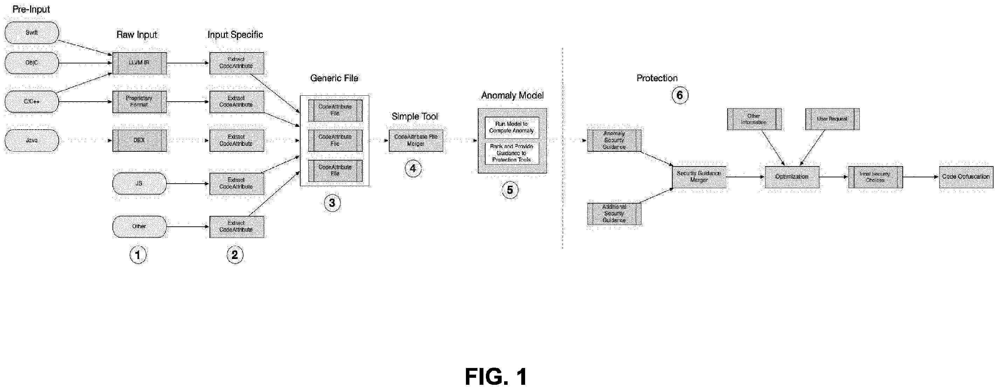

FIG. 1 illustrates an example of how the disclosed implementations can fit into the workflow of a software code protection system which can be implemented, for example, by a service provider. Pre-input can be source code in the form of code in various languages/formats, such as Swift, Java, C/C++ or Objective C. However, depending on the use case, the protection system may not have access to the source code. The actual input code shown at 1 as received by a secure code service provider can be in various forms, such as source, intermediate representations (e.g., LLVM, Java Bytecode, or proprietary formats), and native object code. Code attributes are then extracted from the raw input code at 2. At 3, the extracted attributes can be written into a generic attribute file. At 4, all attribute files from a single project are merged. At 5, the disclosed implementations are implemented to compute a statistical distribution of the code, as disclosed in detail below and to produce guidance on security, also as described below. This can be processed, at 6, combined with additional security and other guidance, fed to an optimizer that produces a final set of security choices, and then used in a known process to create secure code.

Various anomaly detection methods are well known and are generally classified as either supervised of unsupervised anomaly detection techniques. A supervised machine learning anomaly detection method requires the existence of training data including normal and anomalous data points and corresponding labels. Examples of supervised anomaly detection include using neural networks, K-nearest neighbors, and Bayesian networks. Unsupervised machine learning anomaly detection methods do not require labeled training data and are premised on the statistical assumption that only a small percentage of incoming data is anomalous data. Examples of unsupervised methods of anomaly detection include the K-means clustering, autoencoder method, and hypothesis-based analysis.

One known unsupervised method of anomaly detection, known as "isolation forest", identifies anomalies by isolating outliers in the data. Isolation forest detects anomalies faster and requires less memory compared to other common anomaly detection algorithms by leveraging decision tree algorithms. A feature is selected from the given set of features and then a split value between the maximum and minimum values of the selected feature is randomly determined. The partitioning of features produces smaller paths in trees for the anomalous data values to distinguish anomalous data from "normal" data. Disclosed implementations can use isolation forest and other known anomaly detection algorithms.

Curated training data sets do not exist for many systems and, as noted above, in some cases creating a curated data set could be virtually be impossible because the code language might not be human readable. Therefore, a method is needed to estimate and/or rank the security sensitivity for an arbitrary code base that could work with minimal prior knowledge of the code base. Implementations can also be used to measure the effectiveness of protections applied by a code obfuscator. This could be applied during development (to determine the effectiveness of a new feature), during product configuration (to determine a security level to include in a feature), and during customer application (to determine the effectiveness of applied protections).

Disclosed implementations can measure multiple properties of a block of code, usually a portion of the code executing a function, to compare it to other portions of code in the same program, and to identify anomalies as an indicator of security sensitivity. When used a priori on unprotected code, the implementations identify code portions on which to focus protections by flagging anomalous code. When used aposteriori on protected code, the implementations measure the effectiveness of the protection by looking for a reduction in the amount of anomalous code.

The disclosed implementations can be characterised as having five primary phases.
- Partitioning: Breaking code into blocks
- Encoding: Converting blocks of code into a numeric description
- Modelling: Building a model of a code base used for measuring 'anomaly'
- Ranking: Using the models to rank each code block with a measure of anomaly
- Selecting: Using the ranking to determine if a particular code block is, or is not, security relevant.

The partitioning phase breaks code into logical blocks. The most natural partitioning puts one function into each block. However, there may be use cases when a different division is desirable, for example looking at all functions in a compilation unit, or looking at the different basic blocks in a function. There are also some code representations where no function structure is evident, in which case a different partitioning is necessary.

The encoding phase can convert code (e.g., a function) into a numerical representation that is language agnostic. The representation is not necessarily an encoding of the code functionality, but of the code properties, for example the number of conditional instructions. While the output representation can be independent of the input format, the encoding method itself is likely not independent of the input format. Every supported input format (e.g., source code of a specific language, or an intermediate representation such as LLVM IR) can have a corresponding encoding module unique to that format. In some cases, the encoding method could be trivial, simply searching within a file. In other cases, it can be more complex, such as including a custom parser based on the grammar of the input format.

An exemplary, but not exhaustive, list of characteristics that can be captured in an encoding are:
- length of the function name
- number of lines in the function
- number of tokens (operations) in the function body
- number of parameters in the function signature
- number of unique symbols
- number of variables
- number of unique functions referenced by this function
- number of errors encountered while parsing this code (metadata can be used for anomaly detection as well)
- number of times particular symbols or strings of symbols are encountered (e.g. =, :, ;, 1, for, and many others).

Further, the distribution of any of these characteristics, or other characteristics throughout the code can be captured. For example, more unique symbols may appear in the first 25% of the function than in other portions of the function.

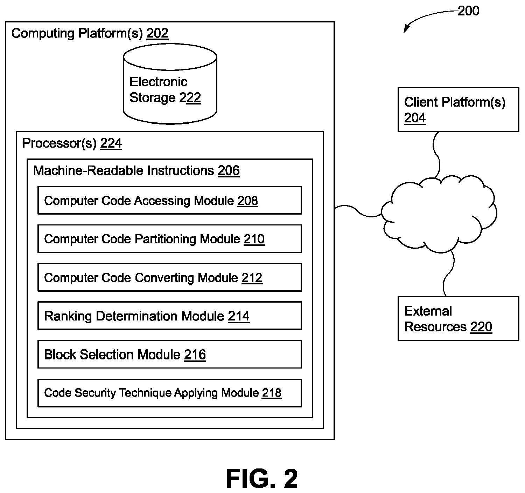

FIG. 2 illustrates a system 200 configured for creating secured computer code, in accordance with one or more implementations. System 200 can be used to accomplish the function discussed at step 5 in FIG. 1, for example. In some implementations, system 200 may include one or more servers 202. Server(s) 202 may be configured to communicate with one or more client computing platforms 204, which may be remote platforms, according to a client/server architecture and/or other architectures. Client computing platform(s) 204 may be configured to communicate with other client computing platforms via server(s) 202 and/or according to a peer-to-peer architecture and/or other architectures. Users may access system 200 via client computing platform(s) 204.

Server(s) 202 may be configured by machine-readable instructions 206 which can be executed by processor(s) 224 of server(s) 202. Machine-readable instructions 206 may include one or more instruction modules. The instruction modules may include computer program modules. The instruction modules may include one or more of computer code accessing module 208, computer code converting module 210, computer code partitioning module 212, ranking determination module 214, block selection module 216, code security technique applying module 218, and/or other instruction modules.

Computer code accessing module 208 may be configured to access unsecured computer code. The phase "unsecured computer code" refers to code which will be secured by the disclosed implementations and can include code that has already had security functions applied thereto.

Computer code partitioning module 210 may be configured to partition the computer code into blocks of code. Partitioning can be accomplished based on code function, code lines, code storage address or in any other appropriate manner. The ideal partitioning method can depend on the format of the code. Two possible partitioning methods are basic blocks, or compilation units.

Computer code converting module 212 may be configured to convert the computer code into a numeric description of characteristics of the code. The converting may include parsing of the code based on the format of the computer code.

By way of non-limiting example, the characteristics of the code may include one or more of a length of a function name, a number of lines in a function, a number of operations in a function body, a number of parameters in a function signature, a number of unique symbols, a number of number of variables, a number of unique functions referenced a function, a number of errors encountered while parsing code, and/or a number of times particular symbols or strings of symbols are encountered.

Ranking determination module 214 may be configured to determine a relative corresponding ranking of at least some of the blocks of code in accordance with an anomaly metric by applying an anomaly detection algorithm to the blocks of code. Determining a corresponding ranking may include building one or more unsupervised learning models for determining anomalies of the computer code. The models may include an isolation forest model. The ranking may be the anomaly metric, a normalization or approximation thereof, or may be in accordance with any scale based on the metrics. In some implementations, determining a corresponding ranking may include assigning a score to each code block and ranking the code blocks based on the score.

Block selection module 216 may be configured to select anomalous blocks of the blocks of code by applying a threshold to the rankings. The selecting may be applied only to code blocks exceeding a threshold rank.

Code security technique applying module 218 may be configured to apply code security techniques to at least one of the anomalous blocks of code to thereby create secured computer code.

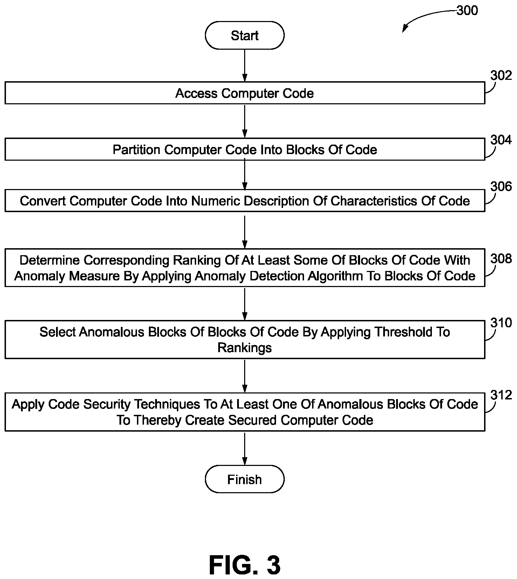

FIG. 3 illustrates a method 300 for creating secured computer code, in accordance with one or more implementations. The operations of method 300 presented below are intended to be illustrative. In some implementations, method 300 may be accomplished with one or more additional operations not described, and/or without one or more of the operations discussed. Additionally, the order in which the operations of method 300 are illustrated in FIG. 3 and described below is not intended to be limiting.

In some implementations, method 300 may be implemented in one or more processing devices (e.g., a digital processor, an analog processor, a digital circuit designed to process information, an analog circuit designed to process information, a state machine, and/or other mechanisms for electronically processing information). For example, method 300 can be implemented by system 200 of FIG. 2. The one or more processing devices may include one or more devices executing some or all of the operations of method 300 in response to instructions stored electronically on an electronic storage medium. The one or more processing devices may include one or more devices configured through hardware, firmware, and/or software to be specifically designed for execution of one or more of the operations of method 300.

An operation 302 may include accessing computer code. Operation 302 may be performed by one or more hardware processors configured by machine-readable instructions including a module that is the same as or similar to computer code accessing module 208, in accordance with one or more implementations.

An operation 306 may include partitioning the computer code into blocks of code. Operation 304 may be performed by one or more hardware processors configured by machine-readable instructions including a module that is the same as or similar to computer code partitioning module 210, in accordance with one or more implementations.

An operation 306 may include converting the computer code into a numeric description of characteristics of the code. Operation 304 may be performed by one or more hardware processors configured by machine-readable instructions including a module that is the same as or similar to computer code converting module 212, in accordance with one or more implementations.

An operation 308 may include determining a corresponding ranking of at least some of the blocks of code with an anomaly measure by applying an anomaly detection algorithm to the blocks of code. Operation 308 may be performed by one or more hardware processors configured by machine-readable instructions including a module that is the same as or similar to ranking determination module 214, in accordance with one or more implementations.

An operation 310 may include selecting anomalous blocks of the blocks of code by applying a threshold to the rankings. Operation 310 may be performed by one or more hardware processors configured by machine-readable instructions including a module that is the same as or similar to block selection module 216, in accordance with one or more implementations.

An operation 312 may include applying code security techniques to at least one of the anomalous blocks of code to thereby create secured computer code. Operation 312 may be performed by one or more hardware processors configured by machine-readable instructions including a module that is the same as or similar to code security technique applying module 218, in accordance with one or more implementations.

Disclosed implementations can leverage a new and novel unsupervised learning model. All of the encoded code, separated into functional blocks, can be used as a single corpus to generate a model of anomaly. The model can be an isolation forest model or another type of model. In an example, the anomaly model can return a number (usually between -1 and 1, although the scale is arbitrary) that indicates how anomalous the code is. A number closer to 0 can indicates that the code is pretty uninteresting (relatively non-anomalous) in comparison to the code that was used to generate the model.

The model can be used to assign a score to each code block. Then, the code blocks are ranked by their score. In this way an ordered list of code blocks, ranked by how anomalous each is, can be produced. Ranking can also include processes such as:
- The maximum score (use absolute value as both +1 and -1 represent highly anomalous code)
- The number of code blocks with score higher than a given threshold (again, in absolute value)
- The standard deviation of scores

The resulting ordered list provides a method of sampling the code blocks in a manner that increases the likelihood of selecting security sensitive code. For example, if the top 50% of code blocks, as ranked, are selected, it can be expected that twice as many security sensitive code blocks are going to be present than if the lower 50% of code blocks were selected. Other selection methods could be used, such as roulette wheel selection, or even simple thresholding.

The first 3 phases (encoding, modeling, ranking) can be run again on code after protection. The measurements taken in ranking can be compared to the ranking accomplished before protection. If the protections were effective, we should expect the maximum score to be lower, fewer code blocks exceeding the threshold, and a lower standard deviation between blocks of code. As noted above, the phases of encoding, modelling, ranking and selection can fit within conventional systems for code protection.

One example of the disclosed implementations could have different definitions of "anomalous" based on specific use cases. Recall that anomalous code is identified relative to other code in the application of interest, so it is not a requirement to "train" the anomaly detector on different types of applications (e.g. games vs. banking apps). However, the exact features being measured, and the threshold for identifying code as anomalous, are parameters of the detection system, and it may be valuable to set these parameters differently for different types of applications.

The disclosed embodiments work even in the scenarios where absolutely no guidance on what code is security sensitive is provided by the user or by other systems. In this case, the measure of effectiveness is how well the technique identifies security sensitive code compared to random guessing. As described above, on sample data the disclosed implementations performed considerably better (30% vs. 17%). Additional embodiments can combine anomaly detection with other information, including explicit user guidance, through tagging for example, such as "this code *is* security sensitive", "this code is *not* security sensitive". Further, implicit user guidance (e.g., the code of interest is in this general part of the application) can be applied, and guidance derived from other techniques (machine learning, heuristics, etc... ) can be applied. The additional guidance can be used to narrow the scope of code being inspected for anomalies, be used to set parameters for detecting anomalies, and/or might simply supplement the conclusions of the anomaly detection technique.

Modelling is described above in a generic way that will work even if nothing is known about the code being analyzed. However, modelling (i.e., determining anomalies) can be improved via additional information in several ways. For example, if it is knowns that the code is for a game, training data from other games can be used to refine how anomalies are characterized. Also, any of input language, frameworks/libraries used (e.g., Unity), target platform, author, older versions of the same code, and more, can be used.

While the original test case used an isolation forest for measuring anomaly, other algorithms would work and may in fact provide for more or less accuracy in terms of estimating security. An autoencoder, built to create a reproduction of an encoded representation of the source code, could be used. The choice of algorithm for the autoencoder is almost arbitrary, so long as it can capture non-linear relationships and accurately model the distribution of the data describing the underlying code corpus. Artificial Neural and Restricted Boltzmann machines, have been demonstrated to be effective for these purposes.

Using one of the above algorithms, an encoder/decoder model pair would be created on the code corpus. The encoding model essentially acts as a form of 'dimensionality reduction' and allows us to explain the variance in the data to differing degrees. Code could then be encoded into a format that uses less information (lower dimensions) by way of the encoder. This encoded form would then be passed through a decoder to produce a reconstruction. Anomaly can then be measured as the degree by which the reconstruction deviates from the original. Ultimately the choice of algorithm used to measure anomaly will depend on how much work goes into preparing/encoding the input data.

The isolation forest used in testing accepted raw token counts as an input, and so required minimal preparation. A neural network based autoencoder might require representing the inputs as deviations from the mean, or some other way that is more conducive to whatever learning algorithm and activation functions are used in the neural network. With the autoencoder method, the concept of dimensionality reduction might become very interesting as it allows control of how general we are with the concept of 'anomaly'.

In some implementations, server(s) 202, client computing platform(s) 204, and/or external resources 220 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 202, client computing platform(s) 104, and/or external resources 220 may be operatively linked via some other communication media.

A given client computing platform 204 may include one or more processors configured to execute computer program modules. The computer program modules may be configured to enable user associated with the given client computing platform 204 to interface with system 200 and/or external resources 220, and/or provide other functionality attributed herein to client computing platform(s) 204. By way of non-limiting example, a given client computing platform 204 may include one or more of a desktop computer, a laptop computer, a handheld computer, a tablet computing platform, a Smartphone, a gaming console, and/or other computing platforms.

External resources 220 may include sources of information outside of system 200, external entities participating with system 200, and/or other resources. In some implementations, some or all of the functionality attributed herein to external resources 220 may be provided by resources included in system 200. As one example, external resources 220 can provide a security service which applies security functions to selected code portions. In another example, external resources 220 can store and transmit/receive code that is to be protected by implementations of system 200.

Server(s) 202 may include electronic storage 222, one or more processors 224, and/or other components. Server(s) 202 may include communication lines, or ports to enable the exchange of information with a network and/or other computing platforms. Illustration of server(s) 202 in FIG. 2 is not intended to be limiting. Server(s) 202 may include a plurality of hardware, software, and/or firmware components operating together to provide the functionality attributed herein to server(s) 202. For example, server(s) 202 may be implemented by a cloud of computing platforms operating together as server(s) 102.

Electronic storage 222 may comprise non-transitory storage media that electronically stores information. The electronic storage media of electronic storage 222 may include one or both of system storage that is provided integrally (i.e., substantially non-removable) with server(s) 202 and/or removable storage that is removably connectable to server(s) 202 via, for example, a port (e.g., a USB port, a firewire port, etc.) or a drive (e.g., a disk drive, etc.). Electronic storage 222 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 122 may include one or more virtual storage resources (e.g., cloud storage, a virtual private network, and/or other virtual storage resources). Electronic storage 222 may store software algorithms, information determined by processor(s) 124, information received from server(s) 202, information received from client computing platform(s) 204, and/or other information that enables server(s) 202 to function as described herein.

Processor(s) 224 may be configured to provide information processing capabilities in server(s) 202. As such, processor(s) 224 may include one or more of a digital processor, an analog processor, a digital circuit designed to process information, an analog circuit designed to process information, a state machine, and/or other mechanisms for electronically processing information. Although processor(s) 224 is shown in FIG. 2 as a single entity, this is for illustrative purposes only. In some implementations, processor(s) 224 may include a plurality of processing units. These processing units may be physically located within the same device, or processor(s) 224 may represent processing functionality of a plurality of devices operating in coordination. Processor(s) 224 may be configured to execute the disclosed modules and/or other modules. Processor(s) 224 may be configured to execute the modules by software; hardware; firmware; some combination of software, hardware, and/or firmware; and/or other mechanisms for configuring processing capabilities on processor(s) 224. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although the modules are illustrated in FIG. 2 as being implemented within a single processing unit, in implementations in which processor(s) 224 includes multiple processing units, one or more of the modules may be implemented remotely from the other modules. The description of the functionality provided by the different modules is for illustrative purposes, and is not intended to be limiting, as any of modules may provide more or less functionality than is described. For example, one or more of the modules may be eliminated, and some or all of its functionality may be provided by modules. As another example, processor(s) 224 may be configured to execute one or more additional modules that may perform some or all of the functionality attributed below to one of the disclosed modules.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the scope of the appended claims. For example, it is to be understood that the present technology contemplates that, to the extent possible, one or more features of any implementation can be combined with one or more features of any other implementation.

## Claims

1. A system configured for processing secured computer code, the system comprising:
one or more hardware processors configured by machine-readable instructions to:
access computer code;
partition the computer code into blocks of code;
convert the blocks of code into a numeric description of characteristics of the code;
determine a corresponding ranking of at least some of the blocks of code with an anomaly measure by applying an anomaly detection algorithm to the blocks of code;
select anomalous blocks of the blocks of code by applying a threshold to the rankings; and
apply code security techniques to at least one of the anomalous blocks of code to thereby create secured computer code.

2. The system of claim 1, wherein the converting includes parsing of the code based on the format of the computer code.

3. The system of claim 1 or 2, wherein the characteristics of the code include one or more of a length of a function name, a number of lines in a function, a number of operations in a function body, a number of parameters in a function signature, a number of unique symbols, a number of variables, a number of unique functions referenced by a function, a number of errors encountered while parsing code, and/or a number of times particular symbols or strings of symbols are encountered.

4. The system of any one of claims 1 to 3, wherein determining a corresponding ranking includes building an unsupervised learning model for determining anomalies of the computer code.

5. The system of claim 4, wherein the model is an isolation forest model.

6. The system of any one of claims 1 to 5, wherein determining a corresponding ranking includes assigning a score to each code block and ranking the code blocks based on the score.

7. The system of any one of claims 1 to 6, wherein the selecting is applied only to code blocks exceeding a threshold rank.

8. The system of any one of claims 1 to 7, wherein the one or more hardware processors are configured by machine-readable instructions to:
access the secured computer code;
partition the secured computer code into blocks of secured computer code;
convert the blocks of secured code into a numeric description of characteristics of the secured code;
determine a corresponding ranking of at least some of the blocks of secured code with an anomaly measure by applying an anomaly detection algorithm to the blocks of secured code; and
compare the corresponding ranking of the at least some of the blocks of secured code with the corresponding ranking of at least some of the blocks of code to thereby determine effectiveness of code protection.

9. A method for creating secured computer code, the method comprising:
accessing computer code;
converting the computer code into a numeric description of characteristics of the code;
partitioning the computer code into blocks of code;
determining a corresponding ranking of at least some of the blocks of code with an anomaly measure by applying an anomaly detection algorithm to the blocks of code;
selecting anomalous blocks of the blocks of code by applying a threshold to the rankings; and
applying code security techniques to at least one of the anomalous blocks of code to thereby create secured computer code.

10. The method of claim 9, wherein the converting includes parsing of the code based on the format of the computer code.

11. The method of claim 9 or 10, wherein the characteristics of the code include one or more of a length of a function name, a number of lines in a function, a number of operations in a function body, a number of parameters in a function signature, a number of unique symbols, a number of variables, a number of unique functions referenced by a function, a number of errors encountered while parsing code, and/or a number of times particular symbols or strings of symbols are encountered.

12. The method of any one of claims 9 to 11, wherein determining a corresponding ranking includes building an unsupervised learning model for determining anomalies of the computer code.

13. The method of claim 12, wherein the model is an isolation forest model.

14. The method of any one of claims 9 to 13, wherein determining a corresponding ranking includes assigning a score to each code block and ranking the code blocks based on the score.

15. The method of any one of claims 9 to 14, wherein the selecting is applied only to code blocks exceeding a threshold rank.

16. The method of any one of claims 9 to 15, further comprising:
accessing the secured computer code;
partitioning the secured computer code into blocks of secured computer code;
converting the blocks of secured code into a numeric description of characteristics of the secured code;
determining a corresponding ranking of at least some of the blocks of secured code with an anomaly measure by applying an anomaly detection algorithm to the blocks of secured code; and
comparing the corresponding ranking of the at least some of the blocks of secured code with the corresponding ranking of at least some of the blocks of code to thereby determine effectiveness of code protection.

17. A computer program which, when executed by one or more processors, causes the one or more processors to carry out the method of any one of claims 9 to 16.

## Patentansprüche

1. System, das zur Verarbeitung eines geschützten Computercodes konfiguriert ist, wobei das System umfasst:
einen oder mehrere Hardware-Prozessoren, die durch maschinenlesbare Befehle konfiguriert werden zum:
Zugreifen auf einen Computercode;
Teilen des Computercodes in Codeblöcke;
Umwandeln der Codeblöcke in eine numerische Darstellung von Merkmalen des Codes;
Bestimmen einer entsprechenden Rangliste zumindest einiger der Codeblöcke mit einer Anomaliemessung, indem ein Anomalie-Erfassungsalgorithmus bei den Codeblöcken angewendet wird;
Auswählen anomaler Blöcke aus den Codeblöcken, indem ein Schwellenwert bei den Ranglisten angewendet wird; und
Anwenden von Code-Sicherheitsverfahren bei mindestens einem der anormalen Codeblöcke, um dadurch einen geschützten Computercode zu erzeugen.

2. System nach Anspruch 1, wobei das Umwandeln das Zerlegen des Codes basierend auf dem Format des Computercodes umfasst.

3. System nach Anspruch 1 oder 2, wobei die Merkmale des Codes ein oder mehrere umfassen von einer Länge eines Funktionsnamens, einer Anzahl von Linien in einer Funktion, einer Anzahl von Operationen in einem Funktionskörper, einer Anzahl von Parametern in einer Funktionssignatur, einer Anzahl von einzigartigen Symbolen, einer Anzahl von Variablen, einer Anzahl von einzigartigen Funktionen, auf die eine Funktion verweist, einer Anzahl von Fehlern, auf die man während des Zerlegens des Codes stößt, und/oder einer Anzahl von Malen, wie oft man auf bestimmte Symbole oder Zeichenfolgen von Symbolen stößt.

4. System nach einem der Ansprüche 1 bis 3, wobei das Bestimmen einer entsprechenden Rangliste das Bilden eines nicht überwachten Lernmodells zum Bestimmen von Anomalien des Computercodes umfasst.

5. System nach Anspruch 4, wobei das Modell ein Isolation Forest Modell ist.

6. System nach einem der Ansprüche 1 bis 5, wobei das Bestimmen einer entsprechenden Rangliste das Zuweisen einer Wertung zu jedem Codeblock und ein Einordnen der Codeblöcke auf Basis der Wertung umfasst.

7. System nach einem der Ansprüche 1 bis 6, wobei das Auswählen nur bei den Codeblöcken angewendet wird, die einen Schwellenrang überschreiten.

8. System nach einem der Ansprüche 1 bis 7, wobei der eine oder die mehr Hardware-Prozessoren durch maschinenlesbare Befehle konfiguriert sind zum:
Zugreifen auf den geschützten Computercode;
Teilen des geschützten Computercodes in Blöcke des geschützten Computercodes;
Umwandeln der Blöcke des geschützten Codes in eine numerische Darstellung von Merkmalen des geschützten Codes;
Bestimmen einer entsprechenden Rangliste zumindest einiger der Blöcke des geschützten Codes mit einer Anomaliemessung, indem ein Anomalie-Erfassungsalgorithmus bei den Blöcken des geschützten Codes angewendet wird; und
Vergleichen der entsprechenden Rangliste zumindest einiger der Blöcke des geschützten Codes mit der entsprechenden Rangliste zumindest einiger der Codeblöcke, um dadurch eine Wirksamkeit des Codeschutzes zu bestimmen.

9. Verfahren zum Erzeugen eines geschützten Computercodes, wobei das Verfahren umfasst:
Zugreifen auf einen Computercode;
Umwandeln des Computercodes in eine numerische Darstellung von Merkmalen des Codes;
Teilen des Computercodes in Codeblöcke;
Bestimmen einer entsprechenden Rangliste zumindest einiger der Codeblöcke mit einer Anomaliemessung, indem ein Anomalie-Erfassungsalgorithmus bei den Codeblöcken angewendet wird;
Auswählen anomaler Blöcke aus den Codeblöcken, indem ein Schwellenwert bei den Ranglisten angewendet wird; und
Anwenden von Code-Sicherheitstechniken bei mindestens einem der anormalen Codeblöcke, um dadurch einen geschützten Computercode zu erzeugen.

10. Verfahren nach Anspruch 9, wobei das Umwandeln das Zerlegen des Codes basierend auf dem Format des Computercodes umfasst.

11. Verfahren nach Anspruch 9 oder 10, wobei die Merkmale des Codes ein oder mehrere umfassen von einer Länge eines Funktionsnamens, einer Anzahl von Linien in einer Funktion, einer Anzahl von Operationen in einem Funktionskörper, einer Anzahl von Parametern in einer Funktionssignatur, einer Anzahl von einzigartigen Symbolen, einer Anzahl von Variablen, einer Anzahl von einzigartigen Funktionen, auf die eine Funktion verweist, einer Anzahl von Fehlern, auf die man während des Zerlegens eines Codes stößt, und/oder einer Anzahl von Malen, wie oft man auf bestimmte Symbole oder Zeichenfolgen von Symbolen stößt.

12. Verfahren nach einem der Ansprüche 9 bis 11, wobei das Bestimmen einer entsprechenden Rangliste das Bilden eines nicht überwachten Lernmodells zum Bestimmen von Anomalien des Computercodes umfasst.

13. Verfahren nach Anspruch 12, wobei das Modell ein Isolation Forest Modell ist.

14. Verfahren nach einem der Ansprüche 9 bis 13, wobei das Bestimmen einer entsprechenden Rangliste das Zuweisen einer Wertung zu jedem Codeblock und ein Einordnen der
Codeblöcke auf Basis der Wertung umfasst.

15. Verfahren nach einem der Ansprüche 9 bis 14, wobei das Auswählen nur bei den Codeblöcken angewendet wird, die einen Schwellenrang überschreiten.

16. Verfahren nach einem der Ansprüche 9 bis 15, weiter umfassend:
Zugreifen auf den geschützten Computercode;
Teilen des geschützten Computercodes in Blöcke des geschützten Computercodes;
Umwandeln der Blöcke des geschützten Codes in eine numerische Darstellung von Merkmalen des geschützten Codes;
Bestimmen einer entsprechenden Rangliste zumindest einiger der Blöcke des geschützten Codes mit einer Anomaliemessung, indem ein Anomalie-Erfassungsalgorithmus bei den Blöcken des geschützten Codes angewendet wird; und
Vergleichen der entsprechenden Rangliste zumindest einiger der Blöcke des geschützten Codes mit der entsprechenden Rangliste zumindest einiger der Codeblöcke, um dadurch eine Wirksamkeit des Codeschutzes zu bestimmen.

17. Computerprogramm, das bei Ausführung durch einen oder mehr Prozessoren den einen oder mehr Prozessoren veranlasst, das Verfahren nach einem der Ansprüche 9 bis 16 auszuführen.

## Revendications

1. Système configuré pour traiter un code informatique sécurisé, le système comprenant :
un ou plusieurs processeurs matériels configurés par des instructions lisibles par machine pour :
accéder à un code informatique ;
partitionner le code informatique en blocs de code ;
convertir les blocs de code en une description numérique de caractéristiques du code ;
déterminer un classement correspondant d'au moins certains des blocs de code avec une mesure d'anomalie en appliquant un algorithme de détection d'anomalie aux blocs de code ;
sélectionner des blocs anormaux parmi les blocs de code en appliquant un seuil aux classements ; et
appliquer des techniques de sécurité de code à au moins un parmi les blocs de code anormaux pour créer ainsi un code informatique sécurisé.

2. Système selon la revendication 1, dans lequel la conversion comporte l'analyse du code sur la base du format du code informatique.

3. Système selon la revendication 1 ou 2, dans lequel les caractéristiques du code comportent un ou plusieurs parmi une longueur d'un nom de fonction, un nombre de lignes dans une fonction, un nombre d'opérations dans un corps de fonction, un nombre de paramètres dans une signature de fonction, un nombre de symboles uniques, un nombre de variables, un nombre de fonctions uniques référencées par une fonction, un nombre d'erreurs rencontrées tout en analysant le code et/ou un nombre de fois où des symboles ou chaînes de symboles particuliers sont rencontrés.

4. Système selon l'une quelconque des revendications 1 à 3, dans lequel la détermination d'un classement correspondant comporte la construction d'un modèle d'apprentissage non supervisé pour déterminer des anomalies du code informatique.

5. Système selon la revendication 4, dans lequel le modèle est un modèle de forêt d'isolement.

6. Système selon l'une quelconque des revendications 1 à 5, dans lequel la détermination d'un classement correspondant comporte l'assignation d'un score à chaque bloc de code et le classement des blocs de code sur la base du score.

7. Système selon l'une quelconque des revendications 1 à 6, dans lequel la sélection est appliquée uniquement à des blocs de code dépassant un rang de seuil.

8. Système selon l'une quelconque des revendications 1 à 7, dans lequel les un ou plusieurs processeurs matériels sont configurés par des instructions lisibles par machine pour :
accéder au code informatique sécurisé ;
partitionner le code informatique sécurisé en blocs de code informatique sécurisé ;
convertir les blocs de code sécurisé en une description numérique de caractéristiques du code sécurisé ;
déterminer un classement correspondant d'au moins certains des blocs de code sécurisé avec une mesure d'anomalie en appliquant un algorithme de détection d'anomalie aux blocs de code sécurisé ; et
comparer le classement correspondant des au moins certains des blocs de code sécurisé avec le classement correspondant d'au moins certains des blocs de code pour déterminer ainsi l'efficacité de la protection de code.

9. Procédé pour créer un code informatique sécurisé, le procédé comprenant :
l'accès à un code informatique ;
la conversion du code informatique en une description numérique de caractéristiques du code ;
le partitionnement du code informatique en blocs de code ;
la détermination d'un classement correspondant d'au moins certains des blocs de code avec une mesure d'anomalie en appliquant un algorithme de détection d'anomalie aux blocs de code ;
la sélection de blocs anormaux parmi les blocs de code en appliquant un seuil aux classements ; et
l'application de techniques de sécurité de code à au moins un parmi les blocs de code anormaux pour créer ainsi un code informatique sécurisé.

10. Procédé selon la revendication 9, dans lequel la conversion comporte l'analyse du code sur la base du format du code informatique.

11. Procédé selon la revendication 9 ou 10, dans lequel les caractéristiques du code comportent un ou plusieurs parmi une longueur d'un nom de fonction, un nombre de lignes dans une fonction, un nombre d'opérations dans un corps de fonction, un nombre de paramètres dans une signature de fonction, un nombre de symboles uniques, un nombre de variables, un nombre de fonctions uniques référencées par une fonction, un nombre d'erreurs rencontrées tout en analysant le code et/ou un nombre de fois où des symboles ou chaînes de symboles particuliers sont rencontrés.

12. Procédé selon l'une quelconque des revendications 9 à 11, dans lequel la détermination d'un classement correspondant comporte la construction d'un modèle d'apprentissage non supervisé pour déterminer des anomalies du code informatique.

13. Procédé selon la revendication 12, dans lequel le modèle est un modèle de forêt d'isolement.

14. Procédé selon l'une quelconque des revendications 9 à 13, dans lequel la détermination d'un classement correspondant comporte l'assignation d'un score à chaque bloc de code et le classement des blocs de code sur la base du score.

15. Procédé selon l'une quelconque des revendications 9 à 14, dans lequel la sélection est appliquée uniquement à des blocs de code dépassant un rang de seuil.

16. Procédé selon l'une quelconque des revendications 9 à 15, comprenant en outre :
l'accès au code informatique sécurisé ;
le partitionnement du code informatique sécurisé en blocs de code informatique sécurisé ;
la conversion des blocs de code sécurisé en une description numérique de caractéristiques du code sécurisé ;
la détermination d'un classement correspondant d'au moins certains des blocs de code sécurisé avec une mesure d'anomalie en appliquant un algorithme de détection d'anomalie aux blocs de code sécurisé ; et
la comparaison du classement correspondant d'au moins certains des blocs de code sécurisé avec le classement correspondant d'au moins certains des blocs de code pour déterminer ainsi l'efficacité de la protection de code.

17. Programme informatique qui, lorsqu'il est exécuté par un ou plusieurs processeurs, amène les un ou plusieurs processeurs à réaliser le procédé selon l'une quelconque des revendications 9 à 16.
